# FASCICULE DE BREVET EUROPEEN

(11) **EP 3 072 818 B1**
(45) Date de publication et mention de la délivrance du brevet: **16.08.2017**
(21) Numéro de dépôt: 16162280.8
(22) Date de dépôt: 24.03.2016
(51) Int. Cl.: B64D 47/04, B64D 47/06, B64C 37/02

(54) **ENSEMBLE VOLANT MUNI D'UN AERONEF ET D'UN DRONE COMPRENANT UN PROJECTEUR DEPORTE**
FLUGEINHEIT, DIE MIT EINEM LUFTFAHRZEUG UND EINER DROHNE AUSGESTATTET IST UND EINEN AUSRÜCKBAREN PROJEKTOR UMFASST
FLYING SYSTEM PROVIDED WITH AN AIRCRAFT AND A DRONE COMPRISING A REMOTE PROJECTOR

(30) Priorité: 27.03.2015 FR 1500616
(43) Date de publication de la demande: 28.09.2016
(73) Titulaire: Airbus Helicopters, 13725 Marignane Cedex (FR)
(72) Inventeur: ROUTIN, Hervé, 13100 AIX EN PROVENCE (FR); CERTAIN-CHAMBAULT, Samuel, 13580 LA FARE LES OLIVIERS (FR); MOUTON, Christophe, 13150 TARASCON (FR); GAZZINO, Marc, 13012 MARSEILLE (FR); VELAYGUET, Jean-Philippe, 30000 Nîmes (FR)
(74) Mandataire: GPI & Associés

(56) Documents cités:
- DE-A1-102009 049 112
- US-A- 5 690 408
- US-A- 6 152 588
- US-A1- 2005 041 433
- US-A1- 2011 279 007
- US-A1- 2014 254 188

## Description

La présente invention concerne un ensemble volant muni d'un aéronef et d'un drone comprenant un projecteur déporté. L'invention se situe donc dans le domaine technique des phares d'aéronef, et plus particulièrement dans le domaine technique des phares de giravion.

Un aéronef et notamment un giravion est usuellement muni d'une pluralité de systèmes d'éclairage embarqués pour éclairer l'environnement extérieur à l'aéronef. Dans leur généralité, de tels systèmes d'éclairage mettent en oeuvre un ou plusieurs phares et des moyens de commande de l'émission d'un faisceau lumineux par le phare.

En particulier, un aéronef peut comporter un système de signalisation permettant de signaler visuellement la présence de cet aéronef. Un tel système de signalisation peut comporter une pluralité de phares dit « feux de signalisation » fixes. L'agencement de ces feux de signalisation au niveau de multiples zones de l'aéronef implique l'utilisation d'un maillage de câbles électriques serpentant dans l'aéronef.

Un aéronef peut aussi comporter un système d'éclairage utilisé en particulier pour effectuer une opération de treuillage. Un tel système d'éclairage comprend un phare de treuillage destiné à éclairer modérément une zone.

Un phare de treuillage comprend généralement un projecteur générant un faisceau lumineux non ajustable géométriquement, ce faisceau lumineux ayant une puissance lumineuse faible et fixe. Le projecteur d'un phare de treuillage est généralement immobile.

Un aéronef peut aussi comporter un système d'éclairage utilisé en particulier durant l'atterrissage de cet aéronef. Un tel système d'éclairage comprend des phares d'atterrissage destinés à éclairer modérément une zone prédéterminée du sol en phase de vol d'approche de l'aéronef.

Un phare d'atterrissage comporte usuellement un projecteur relié électriquement à une source d'énergie électrique. Ce projecteur a usuellement une faible durée de vie, de l'ordre d'une centaine d'heures d'utilisation.

En outre, le projecteur d'un phare d'atterrissage émet généralement un faisceau lumineux présentant une faible puissance optique non ajustable, de l'ordre de 50 Watts par exemple.

De plus, ce faisceau lumineux n'est généralement pas ajustable géométriquement. Par suite, la forme du faisceau lumineux ne peut pas être réglée. Par exemple, le faisceau lumineux prend la forme d'un cône de lumière ne pouvant pas être agrandi ou rétréci pour ajuster les dimensions de la zone éclairée.

Un phare d'atterrissage est par ailleurs pourvu d'un moteur permettant d'orienter le projecteur. Le moteur est relié à des commandes manoeuvrables par un opérateur.

Un aéronef peut aussi comporter un système d'éclairage utilisé en particulier pour effectuer des recherches. Un tel système d'éclairage comprend un phare de recherche destiné à éclairer avec une forte luminosité des zones pouvant être relativement quelconques et éloignées du giravion.

Un phare de recherche comporte alors usuellement un projecteur relié électriquement à une source d'énergie électrique. Ce projecteur a usuellement une durée de vie moyenne, de l'ordre d'un millier d'heures.

En outre et pour remplir sa fonction, le projecteur d'un phare de recherche émet généralement un faisceau lumineux présentant une forte puissance optique non ajustable, de l'ordre de 70 à 140 Watts par exemple. Une telle puissance est de nature à éblouir des personnes au sol. L'utilisation d'un phare de recherche est alors interdite à faible distance de personnes au sol.

Le faisceau lumineux d'un phare de recherche est légèrement ajustable géométriquement. En effet, un phare de recherche peut comporter un dispositif de zoom nécessitant une mécanique complexe soumise à des vibrations. Par exemple, le dispositif de zoom comporte des lentilles mobiles et un système de déplacement mécanique pour déplacer ces lentilles.

Un phare de recherche est par ailleurs pourvu d'un moteur permettant d'orienter le projecteur de ce phare de recherche. Le moteur est relié à des commandes manoeuvrables par un opérateur

Par suite, aucun des phares usuellement agencés sur un giravion ne permet de générer un faisceau lumineux orientable, ayant une géométrie réglable et ayant une puissance lumineuse ajustable.

De plus, les projecteurs des phares d'un giravion est en particulier des phares de recherche et d'atterrissage sont volumineux. Un phare de recherche usuel présente un encombrement important, de l'ordre de l'encombrement d'un cube présentant des arêtes de plusieurs dizaines de centimètres par exemple. Dès lors, ces phares d'atterrissage et de recherche comportent un moteur encombrant pour pouvoir déplacer les projecteurs associés ce qui augmente de manière importante l'encombrement et la masse de l'ensemble du dispositif. Par suite, un phare d'atterrissage ou de recherche génère généralement une traînée aérodynamique importante et pénalisante en vol.

De plus, la forme du faisceau lumineux généré par ces phares de recherche et d'atterrissage n'est généralement pas ajustable en vol. Pour ajuster cette forme, le phare de recherche ou d'atterrissage peut être équipé d'un filtre posé lors d'une opération de maintenance, ou encore de volets mobiles. L'agencement de tels volets se fait au détriment de la traînée aérodynamique du phare.

En outre, un phare de recherche est relié à des câblages électriques de gros diamètre, de l'ordre de cinq centimètres par exemple. Ces câblages s'étendent dans l'aéronef sur des distances importantes. Par suite, un phare de recherche nécessite la mise en oeuvre d'une installation électrique imposante et lourde. Par ailleurs, cette installation électrique peut générer des interférences électromagnétiques gênantes pour d'autres équipements.

La présente invention vise à réduire la traînée aérodynamique d'un phare muni d'un projecteur et d'un moteur, et en particulier d'un phare de recherche.

Le document US 2013/335.989 est éloigné de l'état de la technique répondant à cette problématique. En effet, le document US 2013/335.989 décrit un phare comprenant un projecteur fixe relié par au moins une fibre optique à un système laser déporté. Ce système laser comporte plusieurs sources laser pour générer un faisceau laser ayant une couleur bleu-violet. Ce faisceau possède une longueur d'onde par exemple de l'ordre 405 nm (nanomètres).

Dès lors, le projecteur inclut un moyen d'émission de lumière pour émettre une lumière blanche. Ce moyen d'émission de lumière est muni d'un conducteur de chaleur placé en amont de particules de phosphore. Chaque faisceau laser irradie le conducteur de chaleur pour que les particules de phosphore émettent de la lumière. Le phare émet alors une lumière blanche résultant du mélange de la lumière bleu-violet émise par le système laser et de la lumière émise par les particules de phosphore excitées.

D'autres documents sont éloignés de la problématique de l'invention.

Ainsi, le document WO2013052178 décrit un drone recevant de la puissance électrique sous la forme d'une lumière transmise par une fibre optique. Le drone comporte un récepteur qui convertit une partie de la lumière émise sous une autre forme de puissance, en particulier sous la forme d'une puissance électrique.

Le document US5796890 décrit un dispositif transmettant un signal optique de manière bidirectionnelle entre deux stations distantes. Le signal optique peut être converti pour fournir une puissance électrique et un signal de contrôle électrique.

Le document US 2014/168.940 décrit un système muni d'une lentille interposée entre une fibre optique et une unité d'émission de lumière.

Le document WO 2012/027.851 décrit un système muni d'une source de lumière comprenant une diode électroluminescente. De plus, le système comporte une lentille à divergence modifiable.

Le document US 8.095.014 décrit un système et un procédé pour transmettre des données de manière bidirectionnelle entre une station sol et une station mobile.

Le document FR2814434 décrit un feu de position latéral d'un rotor basculant.

Le document WO 2014/145465 est cité à titre d'information. Ce document décrit un dispositif ophtalmique et ne se situe donc pas dans le domaine technique de l'invention, à savoir le domaine des systèmes d'éclairage d'un aéronef.

Ce dispositif ophtalmique comporte trois sources laser agencées dans un générateur de lumière. Chaque source laser émet un faisceau laser. De plus, un combineur mixe les faisceaux laser pour obtenir un faisceau de lumière dirigé vers une fibre optique. La fibre optique comporte alors une sortie prenant la forme d'une aiguille creuse à insérer dans un oeil.

Les documents DE 10 2009 049112 A1, US 2005/041433 A1, US 6 152 588 A, US 2014/254188 A1, US 2011/279007 A1, et US 5 690 408 A sont aussi connus.

La présente invention a alors pour objet de proposer un ensemble volant comprenant un aéronef et un système d'éclairage apte éventuellement à générer un faisceau lumineux à haute puissance et visant à présenter une traînée aérodynamique réduite.

L'invention concerne alors un ensemble volant comprenant un aéronef muni d'un fuselage et un système d'éclairage, ce système d'éclairage comprenant au moins un projecteur dit « projecteur principal » situé à l'extérieur du fuselage de l'aéronef.

Par exemple, le projecteur principal est un phare de recherche.

De plus, le système d'éclairage comporte au moins un générateur de lumière centralisé agencé à l'intérieur du fuselage, le générateur de lumière comprenant au moins une source lumineuse qui inclut au moins une diode laser pour générer un faisceau lumineux dirigé vers une sortie optique du générateur de lumière, la sortie optique dirigeant le faisceau lumineux vers une entrée optique du projecteur principal, ledit projecteur principal comprenant une tête optique dite « tête optique principale », ladite tête optique principale incluant un système de traitement optique qui transforme une forme géométrique du faisceau lumineux transmis par le générateur de lumière pour émettre vers l'extérieur de la tête optique principale un faisceau de lumière dit « faisceau final » ayant une forme géométrique réglable, le spectre du faisceau final comportant uniquement une ou plusieurs raies du spectre du faisceau lumineux incident. Le spectre du faisceau final comporte donc uniquement des raies placées à des fréquences égales à des raies du spectre du faisceau lumineux incident.

En outre, l'ensemble volant comporte au moins un drone volant à l'extérieur du fuselage, au moins un projecteur dit « projecteur déporté » étant porté par le drone pour projeter un faisceau de lumière dit « faisceau déporté » généré à partir du faisceau lumineux.

Par exemple, le générateur de lumière comprend une pluralité de sources lumineuses qui incluent au moins deux diodes laser émettant chacune un faisceau de lumière dit « faisceau initial » vers un combineur de lumière du générateur de lumière dit « combineur de lumière interne », au moins deux diodes laser émettant respectivement deux faisceaux de longueurs d'ondes différentes, le combineur de lumière interne générant à partir des faisceaux initiaux le faisceau lumineux dirigé vers la sortie optique du générateur de lumière

L'expression « la sortie optique dirigeant le faisceau lumineux vers une entrée optique du projecteur principal » signifie que le système d'éclairage permet la circulation du faisceau lumineux de la sortie optique du générateur de lumière jusqu'à l'entrée optique de la tête optique principale.

De plus, le terme « principal » ou « principale » désigne une partie constitutive du projecteur principal.

L'expression « généré à partir du faisceau lumineux » signifie que le projecteur externe génère le faisceau déporté directement en traitant le faisceau lumineux ou indirectement en traitant le faisceau final résultant du faisceau lumineux.

Le générateur de lumière comporte donc au moins une source lumineuse.

Au moins une source lumineuse comprend une diode laser émettant un faisceau de lumière de type faisceau laser. Une diode laser présente l'avantage d'émettre un faisceau laser à une puissance relativement importante avec une faible surface d'émission. Le faisceau laser émis par une diode laser peut en outre être facilement traité pour être dirigé vers une fibre optique par exemple.

Par conséquent, le système d'éclairage comporte un générateur de lumière muni d'au moins une diode laser voire d'une pluralité de diodes laser différentes. Par exemple, le générateur de lumière comporte au moins une diode laser infrarouge générant un faisceau initial dans une gamme de fréquences infrarouges, et / ou au moins une diode laser bleu générant un faisceau initial de couleur bleu, et/ ou au moins une diode laser rouge générant un faisceau initial de couleur rouge, et / ou au moins une diode laser verte générant un faisceau initial de couleur verte. Une diode laser peut aussi émettre dans le domaine des ultraviolets.

Chaque diode laser peut générer un faisceau quasi-monochromatique allant de l'ultraviolet à l'infrarouge en passant par le domaine visible par un humain. L'expression quasi-monochromatique est connue de l'homme du métier et signifie que le spectre du faisceau émis par la diode laser comporte un spectre étroit d'étendue spectrale inférieure à 10 nanomètres par exemple.

En complément, au moins une source lumineuse peut comprendre une diode électroluminescente émettant un faisceau initial.

En présence de plusieurs faisceaux initiaux, les faisceaux initiaux sont mixés par le combineur de lumière interne. Classiquement, un combineur mélange des faisceaux.

Dès lors, le combineur de lumière interne génère un faisceau lumineux à partir des faisceaux initiaux reçus. Un combineur muni d'au moins un miroir peut par exemple être utilisé.

Un faisceau lumineux est alors un faisceau de forte puissance ayant une couleur résultant de la combinaison réalisée. Cette puissance peut être réglable en contrôlant le combineur ou les sources lumineuses. Le faisceau lumineux transmis au projecteur principal est par exemple un faisceau polychromatique ayant des raies de longueurs d'ondes comprises entre 300 et 900 nanomètres.

Un tel faisceau lumineux est par exemple un faisceau de couleur blanche d'une puissance optique de l'ordre de 100 Watts.

Quelle que soit la variante, le faisceau lumineux est alors transmis à la tête optique dite « tête optique principale » d'un projecteur principal qui est situé en dehors du fuselage. Cette tête optique principale comporte un système de traitement optique qui permet d'ajuster la forme géométrique du faisceau lumineux reçu pour obtenir le faisceau final adéquat en sortie de cette tête optique principale. Par suite, le faisceau final émis par la tête optique principale a un spectre comprenant uniquement une ou plusieurs raies du spectre du faisceau lumineux.

Un spectre comporte au moins une raie, chaque raie étant associée à une fréquence et une intensité. Un spectre est usuellement représenté dans un diagramme comprenant en abscisse une fréquence et en ordonnée une intensité. A titre d'exemple un spectre peut comprendre une raie entre 400 nanomètres et 500 nanomètres, une raie entre 500 nanomètres et 600 nanomètres, puis une raie entre 600 nanomètres et 700 nanomètres.

L'expression « spectre comprenant uniquement une ou plusieurs raies du spectre du faisceau lumineux » signifie que le spectre du faisceau final ne comporte pas des raies placées à des fréquences pour lesquelles le spectre du faisceau lumineux ne contient pas de raies. L'absence d'une raie dans un spectre de fréquences doit alors être entendue comme représentant l'absence d'une raie à une fréquence donnée.

Selon une variante, le système de traitement optique permet d'ajuster uniquement la forme géométrique du faisceau lumineux. Le faisceau final émis par la tête optique principale a alors le même spectre que le faisceau lumineux alimentant la tête optique principale.

Selon une variante, le système de traitement optique permet d'ajuster la forme géométrique du faisceau lumineux. De plus, le système de traitement optique peut comporter un simple filtre passe-bande pour soustraire un faisceau éclairant au faisceau lumineux. Le faisceau final émis par la tête optique principale a alors un spectre réduit comparé au faisceau lumineux alimentant la tête optique principale. Au moins une raie du spectre du faisceau lumineux n'apparait alors pas dans le spectre du faisceau final.

Indépendamment de la variante, un filtre peut aussi diminuer l'intensité associée à une raie.

Le filtre permet d'agir sur la couleur du faisceau lumineux.

Par ailleurs, le faisceau final peut prendre la forme d'un cylindre de lumière, ou d'un cône de lumière ayant une ouverture réglable allant jusqu'à environ 60 degrés par exemple.

L'expression « faisceau initial » désigne donc chaque faisceau émis par une source lumineuse en amont le cas échéant du combineur de lumière interne, l'expression « faisceau lumineux » désignant le faisceau sortant du générateur de lumière, voire d'un combineur de lumière interne. Enfin, l'expression « faisceau final » désigne le faisceau généré par un système de traitement optique.

Dès lors, l'invention propose de réaliser un faisceau de forte de puissance ayant une couleur prédéterminée voire invisible au sein d'un générateur de lumière présent dans un fuselage.

Ce faisceau de forte puissance appelé faisceau lumineux est transmis à la tête optique principale du projecteur principal. La tête optique principale n'étend pas le spectre de longueurs d'onde du faisceau lumineux en n'ajoutant aucune raie à ce spectre, voire ne modifie pas la couleur du faisceau lumineux. La tête optique permet d'ajuster la forme géométrique du faisceau reçu, voire permet de le diriger vers une zone à éclairer.

Cette solution va à l'inverse de l'enseignement du document US 2013/335.989 qui vise à obtenir un faisceau lumineux à l'aide d'un émetteur de lumière agencé dans une tête optique.

La tête optique principale du projecteur principal de l'invention est dépourvue d'un tel émetteur de lumière. En effet, le faisceau lumineux reçu présente déjà la puissance et le spectre de longueurs d'onde maximales requis. Par conséquent, la tête optique principale du projecteur principal peut avoir des dimensions restreintes. A titre illustratif, la tête optique principale peut sensiblement prendre la forme d'un cube pourvu d'arêtes de cinq centimètres. En effet, le faisceau lumineux pénétrant dans la tête optique principale peut par exemple circuler dans des fibres optiques de faible diamètre, de l'ordre du millimètre par exemple. Par ailleurs, le traitement géométrique et optique de ce faisceau peut être réalisé à l'aide lentilles de faibles dimensions et donc peu encombrantes.

L'invention permet alors de mettre en oeuvre une tête optique de petites dimensions, et donc une tête optique générant une faible traînée aérodynamique en vol.

Le générateur de lumière peut au contraire avoir des dimensions relativement encombrantes. Toutefois, cet encombrement est moins gênant an raison de l'agencement du générateur dans le fuselage.

De plus, la tête optique principale du projecteur principal ne nécessite pas d'implémenter des câblages électriques pour générer de la lumière. L'invention permet alors d'éviter les inconvénients de têtes optiques mettant en oeuvre des ampoules électriques.

Dès lors, l'invention permet d'utiliser un générateur de lumière agencé dans un fuselage pour ne pas générer une traînée aérodynamique trop importante. Ce générateur de lumière transmet un faisceau lumineux ayant les caractéristiques maximales souhaitées à au moins une tête optique d'un projecteur, ce qui permet d'agencer des têtes optiques de faibles dimensions. Lesdites caractéristiques comprennent le nombre maximal de raies de longueurs d'ondes, ainsi que la fréquence et l'intensité associées à chaque raie.

Par ailleurs, l'ensemble volant comporte au moins un drone volant à l'extérieur du fuselage, au moins un projecteur étant porté par ledit drone. Cette caractéristique permet d'éclairer une zone distante du fuselage de l'aéronef.

Par exemple, le générateur de lumière comporte une sortie débouchant sur l'extérieur de l'aéronef et dirigée vers le projecteur principal porté par le drone.

De manière alternative, le projecteur principal illumine le drone qui éclaire alors une zone à l'aide du projecteur externe.

Eventuellement, la lumière traversant l'espace aérien entre l'aéronef et le drone est émise dans le domaine de fréquences des ondes invisibles par un humain. A l'inverse, le faisceau déporté peut être émis dans le domaine de fréquences des ondes visibles par un humain ou rester invisible à l'oeil humain mais visible au moyen d'un système de visualisation, par exemple des jumelles de vision nocturne.

L'invention peut de plus comporter une ou plusieurs des caractéristiques qui suivent.

Par exemple, chaque sortie optique est reliée à ladite entrée optique par au moins une fibre optique de liaison.

Un constructeur détermine la fibre optique adéquate selon ses connaissances générales.

Selon cette caractéristique le faisceau lumineux est conduit vers une tête optique au moins en utilisant une fibre optique. La fibre optique permet au faisceau lumineux de suivre facilement un chemin non rectiligne.

Par ailleurs, le générateur de lumière peut comporter un injecteur optique interposé le cas échéant entre le combineur de lumière interne et la sortie optique du générateur de lumière.

Un injecteur optique a pour fonction de rendre convergeant le faisceau lumineux.

Cet injecteur optique permet de focaliser le faisceau final vers la sortie optique pour optimiser sa transmission vers une tête optique. Par exemple, l'injecteur optique focalise le faisceau lumineux vers une fibre optique reliée à la sortie optique.

Par ailleurs, le système de traitement optique du projecteur principal peut comporter un dispositif de zoom en aval de ladite entrée optique.

Les termes « aval » et « amont » sont à considérer au regard du sens de propagation de la lumière.

Le dispositif de zoom peut être un dispositif du commerce. Le dispositif de zoom peut comporter deux lentilles mobiles l'une par rapport à l'autre pour ajuster la forme géométrique du faisceau final.

Le dispositif de zoom peut être contrôlé électriquement à l'aide d'un organe de commande manipulable par un opérateur et relié électriquement à un moteur de faible dimension agencé dans la tête optique.

Le dispositif de zoom peut aussi être contrôlé mécaniquement, au sol en particulier. Par exemple, une lentille coulisse sur un rail ou équivalent, le dispositif de zoom possédant une tirette reliée à la lentille pour la déplacer.

Le système de traitement optique du projecteur principal peut comporter un collimateur de lumière dit « collimateur de lumière déporté» en aval de l'entrée optique.

Le collimateur de lumière déporté peut par exemple élargir ou rendre parallèle le faisceau final avant son entrée dans un dispositif de zoom.

Dès lors, le collimateur de lumière déporté du projecteur principal est agencé en amont d'un dispositif de zoom du projecteur principal.

Par ailleurs, le générateur de lumière peut comporter un système de refroidissement.

Le générateur de lumière permet de générer un faisceau final en utilisant une pluralité de sources lumineuses et notamment de diodes laser. En particulier, le combineur de lumière interne peut générer une lumière blanche à partir de diodes laser différentes. Néanmoins, le dispositif générateur de lumière peut chauffer lors de ce processus.

Dès lors, un système de refroidissement par air ou par liquide peut être implémenté. Par exemple, le générateur de lumière peut comporter un ventilateur. L'agencement d'un tel système de refroidissement n'est pas gênant en soi en raison de l'implantation du générateur de lumière exclusivement dans le fuselage.

En outre, le générateur de lumière peut comporter une alimentation électrique apte à être reliée à un circuit électrique, ladite alimentation électrique étant reliée à chaque source lumineuse et notamment à chaque diode laser.

L'alimentation électrique permet d'alimenter électriquement les sources lumineuses pour faire fonctionner chaque projecteur relié au générateur de lumière, et en particulier le projecteur principal.

Un système de commande peut commander l'alimentation des sources lumineuses, conjointement et/ou séparément, au travers de l'alimentation électrique.

Par ailleurs, le générateur de lumière peut comporter un système d'inhibition pour inhiber ledit faisceau lumineux.

Ce système d'inhibition peut être un système de commande du type précité qui coupe l'alimentation électrique des sources lumineuses.

Néanmoins, ce système d'inhibition peut comporter un diaphragme ou équivalent qui s'interpose sur le chemin suivi par le faisceau lumineux pour l'interrompre. Cette variante présente l'avantage d'éviter d'éteindre les sources lumineuses pour cesser d'émettre le faisceau final à l'aide du projecteur principal.

Par exemple, un bouton marche/arrêt est agencé dans un cockpit. Ce bouton est relié à un diaphragme agencé sur le chemin suivi par le faisceau lumineux.

Au démarrage, les sources lumineuses et notamment les diodes laser sont alimentées électriquement par le circuit électrique de l'aéronef. Dans la position marche, le bouton marche/arrêt ouvre un diaphragme pour laisse passer le faisceau lumineux. A l'inverse dans la position arrêt, le bouton marche/arrêt ferme le diaphragme pour bloquer le faisceau lumineux.

Un autre bouton peut alors commander le système de traitement optique. Enfin, un organe de commande peut éventuellement commander les sources lumineuses afin de régler l'intensité lumineuse voire la couleur du faisceau lumineux.

De même, le projecteur principal peut comporter un dispositif d'inhibition pour inhiber le faisceau lumineux et /ou le faisceau final au sein de la tête optique principale.

Le dispositif d'inhibition peut comporter un diaphragme ou équivalent.

En outre et par exemple dans le cadre d'un phare de recherche, le projecteur principal peut comporter un système de mobilité incluant au moins un moteur relié à la tête optique principale pour déplacer la tête optique principale et le faisceau final émis par le projecteur principal.

L'invention permet d'obtenir une tête optique principale de faibles dimensions. Dès lors, un moteur de faibles dimensions peut aussi être utilisé pour déplacer la tête optique principale dans l'espace.

L'invention est donc particulièrement avantageuse dans le cadre d'un projecteur principal faisant office de phare de recherche.

Par ailleurs, le système d'éclairage peut comporter au moins un projecteur dit « projecteur secondaire » relié optiquement à au moins une diode laser du générateur de lumière, ledit projecteur secondaire comportant une tête optique dite « tête optique secondaire » émettant un faisceau éclairant ayant un spectre comportant uniquement une ou plusieurs raies du spectre du faisceau transmis par le générateur de lumière.

Chaque projecteur secondaire peut aussi être relié à une source lumineuse du type diode électroluminescente.

Par commodité, le terme « secondaire » désigne une partie constitutive d'un projecteur secondaire.

En effet, l'invention permet d'utiliser les diodes laser du générateur de lumière non seulement pour faire fonctionner un projecteur principal mais aussi d'autres projecteurs.

Par exemple, les projecteurs secondaires peuvent être des feux de position ou un feu anticollision clignotant.

Dès lors, chaque projecteur secondaire comporte une tête optique secondaire émettant un faisceau final dit « faisceau éclairant » correspondant au faisceau reçu. Ce faisceau reçu peut être un faisceau initial provenant d'une unique diode laser ou un faisceau lumineux provenant d'un combineur coopérant avec une pluralité de diodes laser. Par exemple, un feu de position est alimenté directement par une diode laser verte et un autre feu par une diode laser rouge.

Par contre, un feu anticollision de couleur blanche est alimenté par le combineur de lumière interne.

Dès lors, le générateur de lumière peut comporter par exemple au moins un miroir par projecteur secondaire pour partager un faisceau en un faisceau réfléchi dirigé vers le projecteur secondaire et un faisceau incident utilisé pour le projecteur principal.

En outre, la tête optique secondaire peut comporter un dispositif de traitement optique comprenant au moins un des organes suivants : un organe d'inhibition pour inhiber le faisceau éclairant émis par la tête optique secondaire, un système de zoom.

Par exemple, un feu anticollision émet classiquement une lumière blanche qui clignote. Un organe d'inhibition est utilisé pour faire clignoter le projecteur secondaire.

Par exemple, un cache optique bloque séquentiellement le faisceau final généré dans la tête optique du projecteur secondaire ou le faisceau transmis à la tête optique par le générateur de lumière.

Le système de zoom peut être du type du dispositif de zoom décrit précédemment.

Un filtre passe-bande peut aussi être implémenté.

Par ailleurs, le projecteur principal peut représenter le projecteur externe du drone, le faisceau déporté étant le faisceau final.

Eventuellement un projecteur intermédiaire ou un miroir orientable peut être fixé à l'aéronef pour diriger le faisceau lumineux vers le drone.

De manière alternative, le drone peut comporter une entrée optique illuminée par le faisceau final provenant du projecteur principal, le projecteur externe comportant un arrangement de traitement optique émettant le faisceau déporté à partir du faisceau final.

Un tel arrangement peut comprendre un des organes décrits précédemment, et notamment un organe d'inhibition pour inhiber le faisceau déporté, un système de zoom, un miroir orientable, un système connu sous l'acronyme DLP..

Par exemple, le drone peut comporter un arrangement de traitement optique muni d'un organe de conversion optique configuré pour transformer un faisceau de lumière invisible par un humain en un faisceau déporté visible par un humain.

Les caractéristiques colorimétriques du faisceau peuvent être modifiées par l'utilisation de phosphores, de cristal photonique, de quantum dot (ajout de longueurs d'ondes au faisceau initial) ou de filtres interférentiels ou colorés (suppression de longueurs d'ondes du faisceau initial). Cette modification peut se faire en transmission à savoir dans l'axe optique du faisceau incident transmis à l'arrangement de traitement, ou en réflexion par l'utilisation d'un miroir sur lequel est apposé l'élément modifiant les propriétés colorimétriques du faisceau incident.

Par ailleurs, l'aéronef peut comporter un dispositif d'alignement optique communiquant avec un récepteur du drone pour positionner ledit drone par rapport à l'aéronef.

Par exemple, l'aéronef émet une ou plusieurs des informations suivantes que le drone reçoit et traite :
- positionnement du drone dans l'espace, potentiellement relativement par rapport à l'aéronef à l'aide d'un dispositif d'alignement optique usuel,
- forme géométrique du faisceau déporté, le drone obtenant cette forme par exemple au moyen d'un zoom optique ou une matrice de micro miroir, par exemple sur la base d'un ordre donné par un pilote via une liaison sans fil à partir d'une interface usuelle,
- caractéristiques colorimétrique du faisceau de sortie, sur la base d'un ordre donné par exemple par un pilote via une liaison sans fil à partir d'une interface usuelle,
- désignation de la zone d'éclairage souhaitée, cette désignation pouvant être faite par une transmission de donnée de positionnement par satellites ou une désignation laser par l'aéronef qui est analysé par un module dédié du drone.

L'invention et ses avantages apparaîtront avec plus de détails dans le cadre de la description qui suit avec des exemples donnés à titre illustratif en référence aux figures annexées qui représentent :
- la figure 1, une vue d'un aéronef selon l'invention,
- la figure 2, une vue présentant un aéronef comprenant deux générateurs de lumière à titre non limitatif,
- la figure 3, un schéma explicitant un système d'éclairage selon l'invention,
- la figure 4, une vue d'un ensemble volant comprenant un aéronef et au moins un drone, et
- les figures 5 et 6, deux vues illustrant un ensemble volant comprenant un aéronef et au moins un drone.

Les éléments présents dans plusieurs figures distinctes sont affectés d'une seule et même référence.

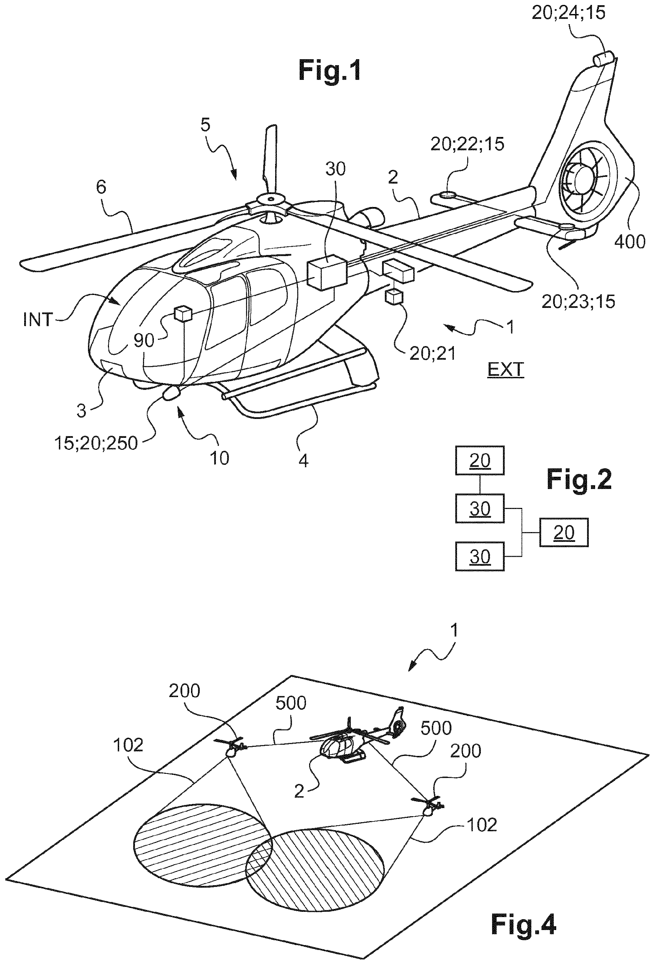

La figure 1 présente un ensemble volant comprenant un aéronef 1 selon l'invention.

Cet aéronef 1 comporte un fuselage 2 qui s'étend longitudinalement d'un nez 3 vers une queue 400. De plus, le fuselage 2 est porté par un train d'atterrissage 4. Cet aéronef 1 est par exemple un giravion, le fuselage 2 portant au moins une voilure tournante 5 munie d'une pluralité de pales 6.

Cet ensemble volant est muni d'un système d'éclairage 10. Le système d'éclairage 10 comprend une pluralité de projecteurs 20.

En particulier, le système d'éclairage comporte un projecteur 20 dit « projecteur principal 21 ». Ce projecteur principal 21 est par exemple un phare de recherche.

De plus, le système d'éclairage peut comporter au moins un projecteur 20 dit « projecteur secondaire 15 ». Par exemple, le système d'éclairage comporte au moins un des projecteurs secondaires suivant situé à l'extérieur EXT du fuselage : un projecteur secondaire 15 de type feu de position droit 22, un projecteur secondaire 15 de type feu de position gauche 23, un projecteur secondaire 15 de type feu de anticollision 24, un projecteur secondaire 15 de type phare d'atterrissage 250. Au moins un projecteur secondaire peut comprendre un organe agencé à l'intérieur du fuselage, tel qu'une lisseuse ou un organe éclairant une soute par exemple.

Par ailleurs, le système d'éclairage 10 comporte en outre au moins un générateur de lumière 30 agencé dans le fuselage.

En effet, la lumière émise par les projecteurs 20 n'est pas produite au sein des projecteurs, mais au sein d'au moins un générateur de lumière 30 centralisé. Dès lors, chaque projecteur peut avoir une dimension optimisée.

Par ailleurs, le système d'éclairage peut en outre comporter un système de commande 90 pour commander l'émission de lumière.

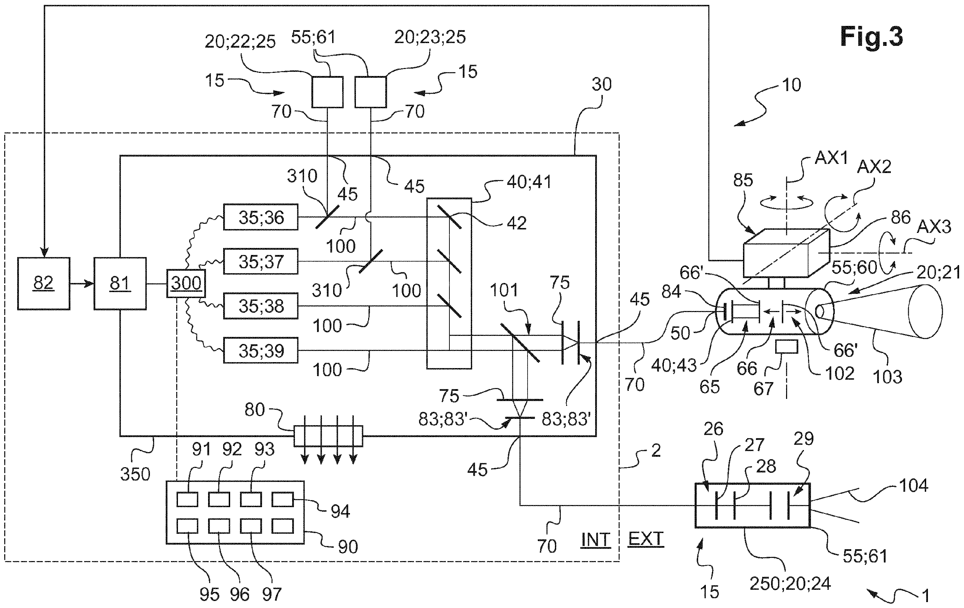

La figure 3 explicite un système d'éclairage muni d'au moins un générateur de lumière 30. En particulier, la figure 3 présente un seul générateur de lumière 30. Cependant, et en référence à la figure 2, au moins deux générateurs de lumière peuvent être implémentés.

En référence à la figure 3, un générateur de lumière 30 comporte un boîtier 350 contenant une pluralité d'organes.

En particulier, le générateur de lumière est muni d'au moins une source lumineuse émettant chacune un faisceau de lumière dit « faisceau initial 100 ».

Le cas échéant, au moins deux sources lumineuses comprennent respectivement deux diodes laser 35 qui sont différentes l'une de l'autre en émettant respectivement deux faisceaux initiaux ayant des longueurs d'ondes différentes. En outre, chaque faisceau initial est un faisceau quasi-monochromatique.

Par exemple, le générateur de lumière 30 comporte au moins une des diodes laser suivantes : une diode laser 36 émettant un faisceau initial de couleur verte, une diode laser 37 émettant un faisceau initial de couleur rouge, une diode laser 38 émettant un faisceau initial de couleur bleu, une diode laser 39 émettant un faisceau initial infrarouge, une diode laser émettant des ultraviolets.

Au moins une diode laser peut par exemple être du type connu sous l'appellation OSRAM PLTB450B et visible sur le réseau internet à l'adresse suivante : http://www.osramos.com/Graphics/XPic1/00088311 0.pdf/PL%20TB450B.pdf.

Les figures ne représentent que des sources lumineuses de type diode laser. Toutefois, au moins une source lumineuse peut comprendre une diode électroluminescente.

De plus, le générateur de lumière 30 possède une alimentation électrique 81 reliée à un circuit électrique 82 de l'aéronef. Cette alimentation électrique 81 est reliée électriquement à chaque source lumineuse pour transmettre un courant électrique à chaque source lumineuse. Eventuellement, un interrupteur 300 permet de couper l'alimentation électrique de toutes les sources lumineuses. Un tel interrupteur peut être commandé par un organe dit « premier organe 91 » d'un système de commande 90 qui est manoeuvrable par un individu. Un tel organe du système de commande peut comprendre un bouton poussoir, un bouton rotatif, un bouton translatif, un bouton à bascule, un écran tactile, un pointeur d'ordinateur, un moyen de saisie, un système de commande vocale... Les liaisons reliant chaque organe du système de commande à l'objet commandé ne sont pas représentées pour ne pas alourdir inutilement la figure 3.

De manière alternative ou complémentaire, le système de commande 90 peut comprendre un organe dit deuxième « organe 92 » pour commander au moins une source lumineuse de manière individuelle.

Selon un autre aspect, le générateur de lumière 30 peut comporter un système de refroidissement 80 pour éviter une surchauffe de ce générateur de lumière lors du fonctionnement des sources lumineuses et en particulier des diodes laser 35. Par exemple, le système de refroidissement 80 comprend au moins un ventilateur évacuant de la chaleur vers l'extérieur du générateur de lumière 30.

Pour transmettre une lumière au projecteur principal 21, le générateur de lumière peut comporter au moins un combineur de lumière optique 40 dit « combineur de lumière interne 41 » pour mixer au moins deux faisceaux initiaux. Usuellement, un tel combineur de lumière peut comporter un ou plusieurs miroirs 42.

Le collimateur de lumière interne peut par exemple comprendre plusieurs miroirs qui ne réfléchissent chacun qu'une onde présentant une longueur d'onde donnée.

Dès lors, le combineur de lumière interne 41 combine au moins deux faisceaux initiaux pour générer un faisceau lumineux 101. Un tel faisceau lumineux 101 peut être un faisceau polychromatique blanc.

Le faisceau lumineux 101 est alors dirigé vers au moins une sortie optique 45 du générateur de lumière 30, en particulier une sortie optique coopérant avec le projecteur principal 21.

Eventuellement, le générateur de lumière 30 comprend un injecteur optique 75. L'injecteur optique 75 est interposé entre le combineur de lumière interne 41 et la sortie optique 45 pour focaliser le faisceau lumineux 101 vers la sortie optique. Un injecteur optique à lentille bille ou convexe usuel peut être utilisé.

Par ailleurs, le générateur de lumière 30 est éventuellement équipé d'un système d'inhibition 83 pour inhiber le faisceau lumineux 101, à savoir pour interrompre la transmission du faisceau lumineux vers la sortie optique. Par exemple, le système d'inhibition 83 comporte un diaphragme 83' ou un masque mobile commandé par un organe dit « troisième organe 93 » du système de commande manoeuvrable par un individu. Le premier organe 91 commandant l'alimentation électrique 30 peut aussi être un élément du système d'inhibition 83.

En particulier, une sortie optique 45 dirige le faisceau lumineux 101 vers une entrée optique 50 du projecteur principal. Par exemple, le faisceau lumineux 101 chemine au moins au sein d'une fibre optique de liaison 70 entre le générateur de lumière 30 et le projecteur principal 21. Néanmoins, une telle fibre optique de liaison peut être omise en fonction du chemin à parcourir, le faisceau lumineux 101 pouvant circuler dans l'air.

Le projecteur principal 21 comprend alors une tête optique 55 dite « têtes optique principale 60 » pour recevoir ce faisceau lumineux 101. La tête optique principale 60 traite le faisceau lumineux 101 pour émettre un faisceau de lumière dit « faisceau final 102 » ayant une forme géométrique 103 réglable.

Eventuellement, la tête optique principale ne modifie pas la couleur du faisceau lumineux, le spectre du faisceau final comportant uniquement une ou plusieurs raies du spectre du faisceau lumineux.

Néanmoins, la tête optique principale peut éventuellement filtrer le faisceau lumineux à l'aide d'un filtre passe-bande. Le faisceau final a alors un spectre de longueurs d'ondes comportant un nombre inférieur de raies de longueurs d'ondes, comparé au nombre de raies du spectre de longueurs d'ondes du faisceau lumineux et/ou un spectre de longueurs d'ondes comportant une raie identique mais à une intensité plus faible que l'intensité de la même raie dans le spectre de longueurs d'ondes du faisceau lumineux.

Ainsi, un filtre peut supprimer au moins une raie du spectre du faisceau lumineux, et/ou réduire l'intensité d'au moins une raie du spectre du faisceau lumineux.

Indépendamment de la variante et pour traiter le faisceau lumineux 101, la tête optique principale 60 inclut un système de traitement optique 65. Ce système de traitement optique 65 comporte par exemple un dispositif de zoom 66 agencé en aval de l'entrée optique 50 du projecteur principal.

Par exemple, le dispositif de zoom 66 possède un système de lentilles 66' mobiles permettant d'adapter la forme géométrique 103 du faisceau final 102. Un système de déplacement 67 manuel ou électrique peut déplacer au moins une lentille 66'.

Par exemple, le système de déplacement 67 est pourvu d'un actionneur électrique de réglage commandé par un organe dit « quatrième organe 94 » du système de commande 90. Cet actionneur électrique peut être alimenté par le circuit électrique 81 à l'aide de câbles électriques de petites sections.

Le dispositif de zoom peut par exemple être du type optotune®.

En outre, le système de traitement optique 65 présenté comporte un collimateur de lumière 40 dit « collimateur de lumière déporté 43» qui est agencé en aval de l'entrée optique 50, et en amont du dispositif de zoom 66.

Par exemple, un tel collimateur comporte une lentille tendant à élargir le faisceau lumineux où à le rendre parallèle.

Un dispositif d'inhibition 84 peut en outre inhiber le faisceau lumineux 101 et/ou le faisceau final 102 au sein de ladite tête optique principale 60 sur ordre d'un organe dit « cinquième organe 95 » du système de commande 90.

Le dispositif d'inhibition peut comporter un diaphragme ou un masque mobile par exemple.

Par ailleurs, le projecteur principal 21 schématisé comporte un système de mobilité 85 pour déplacer en rotation la tête optique principale 60 autour d'au moins un axe AX1, AX2, AX3, voire autour de trois axes.

Dès lors, le système de mobilité est pourvu d'au moins un moteur 86 fixé à la tête optique principale 60. Ce moteur électrique 86 peut être alimenté électriquement par le circuit électrique 81 à l'aide de câbles de petites sections. De plus, le système de mobilité peut être commandé par un organe dit « sixième organe 96 » du système de commande 90.

Outre un projecteur principal, le système d'éclairage 10 peut comporter au moins un projecteur 20 dit « projecteur secondaire 15 ». Chaque projecteur secondaire est relié optiquement à au moins une diode laser 35 du générateur de lumière 30.

Un projecteur secondaire 15 comporte une tête optique 55 dite « tête optique secondaire 25 ». Cette tête optique secondaire émet un faisceau dénommé « faisceau éclairant 104 » pour être distingué du faisceau dit « faisceau final » émis par la tête optique principale. Le faisceau éclairant émis par une tête optique secondaire présente alors un spectre comportant uniquement une ou plusieurs raies du spectre du faisceau transmis par le générateur de lumière 30 à cette tête optique secondaire.

Une tête optique secondaire 25 d'un projecteur secondaire 15 peut comporter un dispositif de traitement optique 26 comprenant au moins un des organes suivants : un organe d'inhibition 27 pour inhiber le faisceau éclairant 104 émis par la tête optique du projecteur secondaire 15, un système de zoom 29.

Toutefois, le dispositif de traitement optique 26 peut comporter un filtre passe-bande pour supprimer au moins une raie du spectre du faisceau transmis par le générateur de lumière 30, et/ou pour réduire l'intensité d'au moins une raie du spectre du faisceau transmis par le générateur de lumière 30.

Au moins un organe dit « septième organe 97 de commande » du système de commande 90 peut commander au moins un équipement du dispositif de traitement optique. En outre, chaque équipement du dispositif de traitement optique peut être du type décrit dans le cadre du système de traitement optique de la tête optique principale.

De même, un projecteur secondaire peut comporter un dispositif de mobilité pour déplacer la tête optique secondaire par rapport au fuselage.

Par exemple, au moins un miroir 310 permet de scinder au moins un faisceau initial 100 en amont du combineur de lumière interne 40. Ainsi, une sortie optique peut être alimentée optiquement par un faisceau initial provenant de la diode laser 36 émettant un faisceau initial de couleur verte.

La sortie optique alimente par exemple un projecteur secondaire de type feu de position droit 22.

De même, une sortie optique peut être alimentée optiquement par un faisceau initial provenant de la diode laser 37 émettant un faisceau initial de couleur rouge pour alimenter par exemple un projecteur secondaire de type feu de position gauche 23.

Par ailleurs, le faisceau lumineux 101 peut être scindé en deux en aval du combineur de lumière interne 40 pour alimenter le projecteur principal 21 et un projecteur secondaire de type phare d'atterrissage 250 ou feu anticollision.

Un feu anticollision peut comporter un système de traitement optique pour clignoter. Ce système de traitement optique est agencé dans le générateur de lumière ou au sein de la tête optique secondaire de ce feu anticollision.

Un phare d'atterrissage peut comporter un système de traitement optique incluant un zoom et un organe d'inhibition commandé par un organe 95 du système de commande pour éteindre ou allumer le phare d'atterrissage.

Ainsi, au démarrage de l'aéronef, un pilote peut utiliser le premier organe 91 pour mettre en fonctionnement le générateur de lumière 30. Les sources lumineuses émettent alors chacune un faisceau initial.

En l'absence de moyens d'inhibition dédiés, les projecteurs secondaires servant de feu de position 22, 23 s'allument.

Par contre, le projecteur principal 21 n'émet pas de lumière. En effet, cette émission de lumière peut être bloquée selon la variante par le système d'inhibition 83 au sein du générateur de lumière, ou encore au sein de la tête optique principale par le dispositif d'inhibition 84.

De même, un phare d'atterrissage peut être neutralisé. Par contre, le feu anticollision peut être actif.

Le pilote manoeuvre alors le système de commande pour allumer ou éteindre les phares d'atterrissage ou le projecteur principal suivant les besoins.

Ainsi, le générateur de lumière est actif au démarrage. Ce générateur de lumière génère au moins un flux de lumière transmis à au moins une tête optique. Chaque tête optique émet ce flux de lumière à l'extérieur du dispositif, sans ajouter de raie au spectre du flux de lumière. Pour éviter la propagation de lumière à partir d'au moins un projecteur, le système d'éclairage comprend au moins un organe apte à bloquer la propagation de la lumière, au sein du générateur de lumière et/ou au sein d'une tête optique.

La figure 4 présente une réalisation particulière de l'invention. Suivant cette réalisation, l'ensemble volant comporte au moins un drone 200 volant à l'extérieur du fuselage, plus précisément deux drones sur la figure 4. Au moins un projecteur 20 dit « projecteur externe » est porté par le drone 200. Le générateur de lumière émet alors une lumière transmise au projecteur externe en traversant un espace aérien 500, cette lumière étant à son tour transmise par le drone au travers du projecteur externe. Le projecteur externe projette alors un faisceau de lumière dit «faisceau déporté » généré à partir du faisceau lumineux 101, voire en fonction du faisceau final.

Eventuellement, le générateur de lumière émet une lumière vers un drone via un projecteur principal ou un projecteur secondaire.

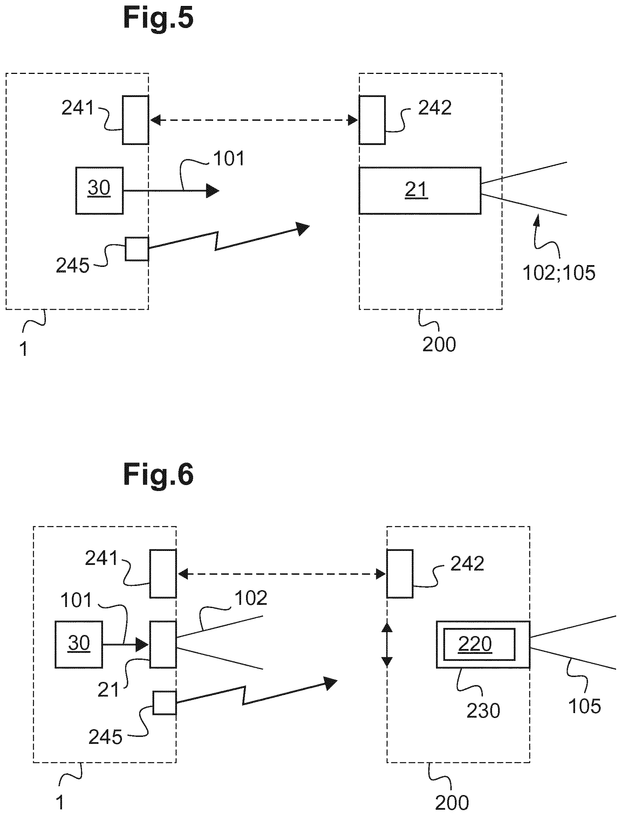

Selon la figure 5, le projecteur principal est agencé sur le drone 200. Dès lors, le projecteur principal 21 représente le projecteur externe, le faisceau déporté 105 étant le faisceau final 102 émis par le projecteur principal 21.

L'aéronef peut comporter un dispositif d'alignement optique 241 communiquant avec un récepteur 242 du drone pour positionner le drone par rapport à l'aéronef.

De plus, un système de commande 245 à distance permet de commander le projecteur principal 21.

Selon la variante de la figure 6, le projecteur principal est agencé sur l'aéronef 1. Le drone 200 comporte alors une entrée optique 240 qui est illuminée par ledit faisceau final 102 provenant du projecteur principal.

Ce faisceau final est transmis au projecteur externe 230. Le projecteur externe 230 comporte alors un arrangement de traitement optique 220 émettant le faisceau déporté 105 à partir du faisceau final 102. En particulier, l'arrangement de traitement optique peut être muni d'un organe de conversion optique configuré pour transformer un faisceau de lumière invisible par un humain en un faisceau déporté visible par un humain.

L'arrangement de traitement optique peut comprendre un des éléments de traitement optique décrits précédemment, voire un moteur déplaçant le projecteur externe par rapport à un corps du drone.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Ensemble volant comprenant un aéronef (1) qui est muni d'un fuselage (2) et un système d'éclairage (10), ledit système d'éclairage (10) comprenant au moins un projecteur (20) dit « projecteur principal (21) » situé à l'extérieur (EXT) du fuselage (2) dudit aéronef (1),
ledit système d'éclairage (10) comportant au moins un générateur de lumière (30) centralisé agencé à l'intérieur (INT) dudit fuselage (2), ledit générateur de lumière (30) comprenant au moins une source lumineuse qui inclut au moins une diode laser (35) pour générer un faisceau lumineux (101) dirigé vers une sortie optique (45) dudit générateur de lumière (30), ladite sortie optique (45) dirigeant ledit faisceau lumineux (101) vers une entrée optique (50) du projecteur principal (21), ledit projecteur principal (21) comprenant une tête optique (55) dite « tête optique principale (60) », ladite tête optique principale (60) incluant un système de traitement optique (65) qui transforme une forme géométrique dudit faisceau lumineux (101) transmis par le générateur de lumière (30) pour émettre vers l'extérieur (EXT) de la tête optique principale (60) un faisceau de lumière dit « faisceau final (102) » ayant une forme géométrique (103) réglable, le spectre du faisceau final comportant uniquement une ou plusieurs raies du spectre dudit faisceau lumineux, **caractérisé en ce que** ledit ensemble volant comporte au moins un drone (200) volant à l'extérieur du fuselage, au moins un projecteur (20) dit « projecteur externe » étant porté par ledit drone (200) pour projeter un faisceau de lumière dit « faisceau déporté (105) » généré à partir dudit faisceau lumineux (101).

2. Ensemble volant selon la revendication 1,
**caractérisé en ce que** ledit générateur de lumière (30) comprend une pluralité de sources lumineuses qui incluent au moins deux diodes laser (35) émettant chacune un faisceau de lumière dit «faisceau initial (100) » vers un combineur de lumière (40) du générateur de lumière (30) dit « combineur de lumière interne (41) », au moins deux diodes laser émettant respectivement deux faisceaux de longueurs d'ondes différentes, ledit combineur de lumière interne (41) générant à partir desdits faisceaux initiaux (100) ledit faisceau lumineux (101) dirigé vers la sortie optique (45) dudit générateur de lumière (30).

3. Ensemble volant selon l'une quelconque des revendications 1 à 2,
**caractérisé en ce que** la sortie optique (45) est reliée à ladite entrée optique (50) par au moins une fibre optique de liaison (70).

4. Ensemble volant selon la revendication 2,
**caractérisé en ce que** ledit générateur de lumière (30) comporte un injecteur optique (75) interposé entre ledit combineur de lumière interne (41) et ladite sortie optique (45).

5. Ensemble volant selon l'une quelconque des revendications 1 à 4,
**caractérisé en ce que** ledit système de traitement optique (65) comporte un dispositif de zoom (66) en aval de ladite entrée optique (50).

6. Ensemble volant selon l'une quelconque des revendications 1 à 5,
**caractérisé en ce que** ledit système de traitement optique (65) comporte un collimateur de lumière (40) dit « collimateur de lumière déporté (43)» en aval de ladite entrée optique (50).

7. Ensemble volant selon la revendication 6,
**caractérisé en ce que** ledit collimateur de lumière déporté (43) est agencé en amont d'un dispositif de zoom (66).

8. Ensemble volant selon l'une quelconque des revendications 1 à 7,
**caractérisé en ce que** ledit générateur de lumière (30) comporte une alimentation électrique (80) apte à être reliée à un circuit électrique (81), ladite alimentation électrique (80) étant reliée à chaque source lumineuse.

9. Ensemble volant selon l'une quelconque des revendications 1 à 8,
**caractérisé en ce que** ledit générateur de lumière (30) comporte un système d'inhibition (83) pour inhiber ledit faisceau lumineux (101).

10. Ensemble volant selon l'une quelconque des revendications 1 à 9,
**caractérisé en ce que** ledit projecteur principal (21) comporte un dispositif d'inhibition (84) pour inhiber ledit faisceau lumineux (101) et/ou le faisceau final (102) au sein de ladite tête optique principale (60).

11. Ensemble volant selon l'une quelconque des revendications 1 à 10,
**caractérisé en ce que** ledit projecteur principal (21) comporte un système de mobilité (85) incluant au moins un moteur (86) relié à ladite tête optique principale (60) pour déplacer cette tête optique principale (60) et le faisceau final (102) émis par le projecteur principal (21).

12. Ensemble volant selon l'une quelconque des revendications 1 à 11,
**caractérisé en ce que** ledit système d'éclairage (10) comporte au moins un projecteur (20) dit « projecteur secondaire (15) » relié optiquement à au moins une diode laser (35) dudit générateur de lumière (30), ledit projecteur secondaire (15) comportant une tête optique (55) dite « têtes optique secondaire (25) » émettant un faisceau éclairant (104) ayant un spectre comportant uniquement une ou plusieurs raies du spectre du faisceau transmis par le générateur de lumière (30).

13. Ensemble volant selon la revendication 12,
**caractérisé en ce que** ladite tête optique secondaire (25) d'un projecteur secondaire (15) comporte un dispositif de traitement optique (26) comprenant au moins un des organes suivants : un organe d'inhibition (27) pour inhiber le faisceau éclairant (104) émis par la tête optique du projecteur secondaire (15), un système de zoom (29).

14. Ensemble volant selon l'une quelconque des revendications 1 à 13,
**caractérisé en ce que** ledit projecteur principal (21) représente ledit projecteur externe, ledit faisceau déporté (105) étant ledit faisceau final (102).

15. Ensemble volant selon l'une quelconque des revendications 1 à 13,
**caractérisé en ce que** ledit drone (200) comporte une entrée optique illuminée par ledit faisceau final (102) provenant du projecteur principal (21), ledit projecteur externe comportant un arrangement de traitement optique (220) émettant le faisceau déporté (105) à partir du faisceau final (102).

16. Ensemble volant selon l'une quelconque des revendications 1 à 15,
**caractérisé en ce que** ledit drone (200) comporte un arrangement de traitement optique (220) muni d'un organe de conversion optique configuré pour transformer un faisceau de lumière invisible par un humain en un faisceau déporté (105) visible par un humain.

17. Ensemble volant selon l'une quelconque des revendications 1 à 16,
**caractérisé en ce que** ledit aéronef (1) comporte un dispositif d'alignement optique (241) communiquant avec un récepteur (242) du drone (200) pour positionner ledit drone (200) par rapport à l'aéronef (1).

## Patentansprüche

1. Flugeinheit mit einem Luftfahrzeug (1), welches mit einem Rumpf (2) und einem Beleuchtungssystem (10) versehen ist, wobei das Beleuchtungssystem (10) mindestens einen "Hauptprojektor (21)" genannten Projektor (20) aufweist, der außerhalb (EXT) des Rumpfes (2) des Luftfahrzeugs (1) angeordnet ist, wobei das Beleuchtungssystem (10) mindestens einen Lichtgenerator (30) aufweist, der mittig im Inneren (INT) des Rumpfes (2) angeordnet ist, wobei der Lichtgenerator (30) mindestens eine Lichtquelle aufweist, die mindestens eine Laserdiode (35) umfasst zur Erzeugung eines Lichtstrahlenbündels (101), das auf einen optischen Ausgang (45) des Lichtgenerators (30) gerichtet ist, wobei der optische Ausgang (45) das Lichtstrahlenbündel (101) zu einem optischen Eingang (50) des Hauptprojektors (21) lenkt, wobei der Hauptprojektor (21) einen "optischer Hauptkopf (60)" genannten optischen Kopf (55) aufweist, wobei der optische Hauptkopf (60) ein System (65) zur optischen Verarbeitung umfasst, das eine geometrische Form des von dem Lichtgenerator (30) übertragenen Lichtstrahlenbündels (101) umwandelt, um nach außerhalb (EXT) des optischen Hauptkopfes (60) ein "Endstrahlenbündel (102)" genanntes Lichtstrahlenbündel zu senden, das eine einstellbare geometrische Form aufweist, wobei das Spektrum des Endstrahlenbündels nur einen oder mehrere Strahlen des Spektrums des Lichtstrahlenbündels aufweist, **dadurch gekennzeichnet, dass** die Flugeinheit mindestens eine Drohne (200) aufweist, die außerhalb des Rumpfes fliegt, wobei mindestens ein "äußerer Projektor" genannter Projektor (20) von der Drohne (200) getragen wird, um ein "ausgelagertes Strahlenbündel (105)" genanntes Strahlenbündel zu projizieren, das ausgehend von dem Lichtstrahlenbündel (101) erzeugt wurde.

2. Flugeinheit nach Anspruch 1,
**dadurch gekennzeichnet, dass** der Lichtgenerator (30) eine Mehrzahl von Lichtquellen aufweist, die mindestens zwei Laserdioden (35) umfassen, die jeweils ein "ursprüngliches Lichtstrahlenbündel (100)" genanntes Lichtstrahlenbündel zu einem Lichtkombinierer (40) des Lichtgenerators (30), genannt "innerer Lichtkombinierer (41)", aussenden, wobei die mindestens zwei Laserdioden jeweils zwei Strahlenbündel mit unterschiedlicher Wellenlänge aussenden, wobei der innere Lichtkombinierer (41) ausgehend von den ursprünglichen Strahlenbündeln (100) das Lichtstrahlenbündel (101) erzeugt, das auf den optischen Ausgang (45) des Lichtgenerators (30) gerichtet ist.

3. Flugeinheit nach einem der Ansprüche 1 bis 2,
**dadurch gekennzeichnet, dass** der optische Ausgang (45) mit dem optischen Eingang (50) über mindestens eine optische Verbindungsfaser (70) verbunden ist.

4. Flugeinheit nach Anspruch 2,
**dadurch gekennzeichnet, dass** der Lichtgenerator (30) einen optischen Injektor (75) aufweist, der zwischen dem inneren Lichtkombinierer (41) und dem optischen Ausgang (45) angeordnet ist.

5. Flugeinheit nach einem der Ansprüche 1 bis 4,
**dadurch gekennzeichnet, dass** das optische Verarbeitungssystem (65) hinter dem optischen Eingang (50) eine Zoom-Vorrichtung (66) aufweist.

6. Flugeinheit nach einem der Ansprüche 1 bis 5,
**dadurch gekennzeichnet, dass** das optische Verarbeitungssystem (65) einen "ausgelagerter Lichtkollimator (43)" genannten Lichtkollimator (40) hinter dem optischen Eingang (50) aufweist.

7. Flugeinheit nach Anspruch 6,
**dadurch gekennzeichnet, dass** der ausgelagerte Lichtkollimator (43) vor der Zoom-Vorrichtung (66) angeordnet ist.

8. Flugeinheit nach einem der Ansprüche 1 bis 7,
**dadurch gekennzeichnet, dass** der Lichtgenerator (30) eine Stromversorgung (80) aufweist, die an einen elektrischen Stromkreis (81) angeschlossen werden kann, wobei die elektrische Stromversorgung (80) mit jeder der Lichtquellen verbunden ist.

9. Flugeinheit nach einem der Ansprüche 1 bis 8,
**dadurch gekennzeichnet, dass** der Lichtgenerator (30) ein Unterdrückungssystem aufweist, um das Lichtstrahlenbündel (101) zu unterdrücken.

10. Flugeinheit nach einem der Ansprüche 1 bis 9,
**dadurch gekennzeichnet, dass** der Hauptprojektor (21) eine Unterdrückungsvorrichtung (84) aufweist, um das Lichtstrahlenbündel (101) und/oder das Endstrahlenbündel (102) am optischen Hauptkopf (60) zu unterdrücken.

11. Flugeinheit nach einem der Ansprüche 1 bis 10,
**dadurch gekennzeichnet, dass** der Hauptprojektor (21) ein Beweglichkeitssystem (85) aufweist, das mindestens einen Motor (86) umfasst, der mit dem optischen Hauptkopf (60) verbunden ist, um diesen optischen Hauptkopf (60) und das Endstrahlenbündel (102), das von dem Hauptprojektor (21) ausgesendet wird, zu bewegen.

12. Flugeinheit nach einem der Ansprüche 1 bis 11,
**dadurch gekennzeichnet, dass** das Beleuchtungssystem (10) mindestens einen "Nebenprojektor (15)" genannten Projektor (20) aufweist, der optisch mit mindestens einer Laserdiode (35) des Lichtgenerators (30) verbunden ist, wobei der Nebenprojektor (15) einen "optischer Nebenkopf (25)" genannten optischen Kopf aufweist, der ein Beleuchtungslichtstrahlenbündel (104) aussendet, das ein Spektrum aufweist, das nur einen oder mehrere Lichtstrahlen des Spektrums des Lichtstrahlenbündels aufweist, das von dem Lichtgenerator (30) übertragen wird.

13. Flugeinheit nach Anspruch 12,
**dadurch gekennzeichnet, dass** der optische Nebenkopf (25) eines Nebenprojektors (15) eine Vorrichtung (26) zur optischen Verarbeitung aufweist mit mindestens einem der folgenden Elemente: einem Unterdrückungselement (27) zum Unterdrücken des Beleuchtungslichtstrahls (104), der von dem optischen Kopf des Nebenprojektors (15) ausgesendet wird, und einem Zoom-System (29).

14. Flugeinheit nach einem der Ansprüche 1 bis 13,
**dadurch gekennzeichnet, dass** der Hauptprojektor (21) den äußeren Projektor darstellt, wobei das ausgelagerte Strahlenbündel (105) das Endstrahlenbündel (102) ist.

15. Flugeinheit nach einem der Ansprüche 1 bis 13,
**dadurch gekennzeichnet, dass** die Drohne (200) einen optischen Eingang aufweist, der von dem Endstrahlenbündel (102) beleuchtet wird, das von dem Hauptprojektor (21) herrührt, wobei der äußere Projektor eine optische Verarbeitungsanordnung (220) aufweist, die das ausgelagerte Strahlenbündel (105) ausgehend von dem Endstrahlenbündel (102) aussendet.

16. Flugeinheit nach einem der Ansprüche 1 bis 15,
**dadurch gekennzeichnet, dass** die Drohne (200) eine optische Verarbeitungsanordnung (220) aufweist, die mit einem optischen Umwandlungselement versehen ist, das ausgestaltet ist, um ein Strahlenbündel von für den Menschen unsichtbarem Licht in ein ausgelagertes Strahlenbündel (105) umzuwandeln, das für einen Menschen sichtbar ist.

17. Flugeinheit nach einem der Ansprüche 1 bis 16,
**dadurch gekennzeichnet, dass** das Luftfahrzeug (1) eine Vorrichtung zur optischen Ausrichtung (241) aufweist, die mit einem Empfänger (242) der Drohne (200) zusammenwirkt, um die Drohne (200) relativ zu dem Luftfahrzeug (1) zu positionieren.

## Claims

1. Flying assembly comprising an aircraft (1) which is provided with a fuselage (2) and a lighting system (10), said lighting system (10) comprising at least one projector (20) called "main projector (21)" situated on the exterior (EXT) of the fuselage (2) of said aircraft (1),
said lighting system (10) comprising at least one centralised light generator (30) arranged on the interior (INT) of said fuselage (2), said light generator (30) comprising at least one light source which includes at least one laser diode (35) for generating a light beam (101) directed towards an optical outlet (45) of said light generator (30), said optical outlet (45) directing said light beam (101) towards an optical inlet (50) of the main projector (21), said main projector (21) comprising an optical head (55) called "main optical head (60)", said main optical head (60) including an optical processing system (65) which transforms a geometrical shape of said light beam (101) transmitted by the light generator (30) for emitting towards the exterior (EXT) of the main optical head (60) a light beam called "final beam (102)" having an adjustable geometrical shape (103), the spectrum of the final beam comprising only one or a plurality of lines of the spectrum of said light beam,
**characterised in that** said flying assembly comprises at least one drone (200) flying outside the fuselage, at least one projector (20) called "external projector" being carried by said drone (200) for projecting a light beam called "offset beam (105)" generated from said light beam (101).

2. Flying assembly according to claim 1,
**characterised in that** said light generator (30) comprises a plurality of light sources which include at least two laser diodes (35), each emitting a light beam called "initial beam (100)" towards a light combiner (40) of the light generator (30) called "internal light combiner (41)", at least two laser diodes emitting respectively two beams of different wavelengths, said internal light combiner (41) generating from said initial beams (100) said light beam (101) directed towards the optical outlet (45) of said light generator (30).

3. Flying assembly according to any one of claims 1 to 2,
**characterised in that** the optical outlet (45) is connected to said optical inlet (50) by at least one connecting optical fibre (70).

4. Flying assembly according to claim 2,
**characterised in that** said light generator (30) comprises an optical injector (75) interposed between said internal light combiner (41) and said optical outlet (45).

5. Flying assembly according to any one of claims 1 to 4,
**characterised in that** said optical processing system (65) comprises a zoom device (66) downstream of said optical inlet (50).

6. Flying assembly according to any one of claims 1 to 5,
**characterised in that** said optical processing system (65) comprises a light collimator (40) called "offset light collimator (43)" downstream of said optical input (50).

7. Flying assembly according to claim 6,
**characterised in that** said offset light collimator (43) is arranged upstream of a zoom device (66).

8. Flying assembly according to any one of claims 1 to 7,
**characterised in that** said light generator (30) comprises an electrical supply (80) suitable for being connected to an electric circuit (81), said electrical supply (80) being connected to each light source.

9. Flying assembly according to any one of claims 1 to 8,
**characterised in that** said light generator (30) comprises an inhibition system (83) for inhibiting said light beam (101).

10. Flying assembly according to any one of claims 1 to 9,
**characterised in that** said main projector (21) comprises an inhibition device (84) for inhibiting said light beam (101) and/or the final beam (102) within said main optical head (60).

11. Flying assembly according to any one of claims 1 to 10,
**characterised in that** said main projector (21) comprises a mobility system (85) including at least one motor (86) connected to said main optical head (60) for displacing this main optical head (60) and the final beam (102) emitted by the main projector (21).

12. Flying assembly according to any one of claims 1 to 11, **characterised in that** said lighting system (10) comprises at least one projector (20) called "secondary projector (15)" connected optically to at least one laser diode (35) of said light generator (30), said secondary projector (15) comprising an optical head (55) called "secondary optical head (25)" emitting a lighting beam (104) having a spectrum comprising only one or a plurality of lines of the spectrum of the beam transmitted by the light generator (30).

13. Flying assembly according to claim 12,
**characterised in that** said secondary optical head (25) of a secondary projector (15) comprises an optical processing device (26) comprising at least one of the following members: an inhibition member (27) for inhibiting the lighting beam (104) emitted by the optical head of the secondary projector (15), a zoom system (29).

14. Flying assembly according to any one of claims 1 to 13, **characterised in that** said main projector (21) represents said external projector, said offset beam (105) being said final beam (102).

15. Flying assembly according to any one of claims 1 to 13, **characterised in that** said drone (200) comprises an optical inlet illuminated by said final beam (102) coming from the main projector (21), said external projector comprising an optical processing arrangement (220) emitting the offset beam (105) from the final beam (102).

16. Flying assembly according to any one of claims 1 to 15,
**characterised in that** said drone (200) comprises an optical processing arrangement (220) provided with an optical conversion member configured to transform a light beam invisible by a human into an offset beam (105) visible by a human.

17. Flying assembly according to any one of claims 1 to 16,
**characterised in that** said aircraft (1) comprises an optical alignment device (241) communicating with a receiver (242) of the drone (200) for positioning said drone (200) relative to the aircraft (1).
